# EUROPÄISCHE PATENTSCHRIFT

(11) **EP 2 762 763 B1**
(45) Veröffentlichungstag und Bekanntmachung des Hinweises auf die Patenterteilung: **27.04.2022**
(21) Anmeldenummer: 14152527.9
(22) Anmeldetag: 24.01.2014
(51) Int. Cl.: F16M 1/00, G10K 11/16, E04B 1/82, E04H 1/12, E04B 1/24

(54) **RAHMENSTRUKTUR ZUM AUFBAU EINER SCHALLSCHUTZKABINE**
FRAME STRUCTURES FOR FORMING A NOISE PROTECTION CABIN
STRUCTURE DE CADRE POUR LE MONTAGE D'UNE CABINE D'ISOLATION PHONIQUE

(30) Priorität: 25.01.2013 DE 102013001317
(43) Veröffentlichungstag der Anmeldung: 06.08.2014
(73) Patentinhaber: Panteri, Alessandro, 50131 Firenze (IT)
(72) Erfinder: Lamberini, Claudio, 05100 Terni (IT)
(74) Vertreter: Henkel & Partner mbB

(56) Entgegenhaltungen:
- DE-U1- 9 318 348
- DE-U1- 29 708 533
- US-A- 3 302 547
- US-A- 4 258 511

## Beschreibung

Die Erfindung betrifft eine Rahmenstruktur zum Aufbau einer Schallschutzkabine nach dem Oberbegriff des Anspruches 1.

Schallschutzkabinen werden eingesetzt, um innerhalb von Gebäuden abgeschlossene Räume zu bilden, innerhalb denen z.B. Musik gespielt oder Arbeiten verrichtet werden können, ohne dass der dabei erzeugte Schall nach Außen tritt. Schallschutzkabinen sind natürlich auch einsetzbar, um umgekehrt einen Ruheraum innerhalb eines Gebäudes zu schaffen, der gegenüber Außengeräuschen abgeschirmt ist.

Schallschutz in dieser Form erfordert regelmäßig einen vollständig umschlossenen Raum und Außenwände mit hoher Masse. Schallschutzkabinen, zumindest solche, die ein bestimmtes Niveau an Schallschutz bieten, sind daher in der Regel sehr aufwändig konstruiert und teuer und nur durch fachkundiges Personal mit mehreren Personen herzustellen. Schallschutzkabinen, die auch von nicht-fachkundigem Personal aufgebaut werden können, existieren praktisch nicht. Außerdem ist auch der Transport der großen Massen über größere Entfernungen sehr kostenträchtig.

Aus der DE 9318348 U1 ist eine gattungsgemäße Rahmenstruktur zum Aufbau einer Schallschutzkabine bekannt. Die Profilsegmente des Deckenrahmens umfassen Eckverbindungsprofile sowie dazwischen angeordnete U-Profile und separate Abdeckblenden.

Die US 4258511 B beschreibt eine Rahmenstruktur zum Aufbau einer Schallschutzkabine, bei der die einzelnen Profilsegmente des Boden- und Deckenrahmens als geschlossene Hohlprofile ausgebildet sind, deren offene axialen Enden auf Verbindungszapfen aufsteckbar sind, die an den oberen und unteren Enden von Eckständern jeweils vorstehend ausgebildet sind.

Die US 3302547 A beschreibt eine tragbare Mehrzweckkabine mit Belüftungsmitteln und ist nicht speziell auf den Aufbau einer Schallschutzkabine gerichtet.

Die DE 29708533 U1 beschreibt eine zerlegbare Raumzelle als Wohncontainer oder Duschkabine. Die Rahmenstruktur dieser Raumzelle besteht aus vertikalen Eckständern, Zwischenständern, einem horizontalen Bodenrahmen und einem horizontalen Deckenrahmen. Der Deckenrahmen wird durch nach oben offene U-Profile gebildet, die zur Bildung eines selbsttragenden Rahmens im Eckbereich direkt auf Stoß miteinander verbunden sind. Die Verbindung zwischen den Eckständern und dem Rahmen erfolgt über Befestigungswinkel, die einerseits an den Eckständern und andererseits an der Unterseite des Rahmens befestigt sind. Der Deckenrahmen hat in einem Teilbereich einen nach unten offenen Bereich, der durch einen Anschlag definiert ist und in den von unten und von der Innenseite der Raumzelle her eine Wandplatte einsetzbar ist.

Aufgabe der Erfindung ist es, eine Rahmenstruktur zum Aufbau einer Schallschutzkabine bereitzustellen, die einen Aufbau einer solchen Schallschutzkabine auch von nicht-fachkundigem Personal ermöglicht.

Gelöst wird diese Aufgabe durch eine Rahmenstruktur zum Aufbau einer Schallschutzkabine mit den Merkmalen des Patentanspruches 1. Bevorzugte Ausgestaltungen der Rahmenstruktur sind in den abhängigen Ansprüchen angegeben.

Die erfindungsgemäße Rahmenstruktur besitzt einen horizontalen Bodenrahmen und einen horizontalen Deckenrahmen, wobei der Bodenrahmen und der Deckenrahmen jeweils aus Profilsegmenten zusammengesetzt sind. Der Bodenrahmen und der Deckenrahmen sind mindestens durch vertikale Eck-Ständer und optional weitere Ständer lösbar miteinander verbunden und bilden so eine selbsttragende Struktur, in die plattenartiges Füllungsmaterial zum Ausfüllen von Strukturöffnungen zwischen den Profilsegmenten und Ständern zum Umschließen der Schallschutzkabine eingesetzt werden kann. Indem eine selbsttragende Struktur aus Profilsegmenten und Ständern modular aufgebaut ist, wird einerseits erreicht, dass der Transport des Materials für die Schallschutzkabine vereinfacht ist und andererseits der Aufbau auch von nicht-fachkundigem Personal vorgenommen werden kann, weil die Montagestruktur durch die Profilsegmente und Ständer und deren Verbindungen miteinander vorgegeben ist. Außerdem bietet die selbsttragende Struktur des Rahmens eine stabile Einheit, die auch Erdbeben und dergleichen standhält. Schließlich wird es durch die selbsttragende Struktur und die Einsetzbarkeit des plattenartigen Füllungsmaterials zum Ausfüllen von Strukturöffnungen in diese selbsttragende Struktur möglich, das üblicherweise sehr schwere Füllungsmaterial aus den verschiedensten Ausgangsmaterialien herzustellen und z.B. von einem anderen Lieferanten zu beziehen wie die Rahmenstruktur, so dass Lieferwege verkürzt sein können. Das Füllungsmaterial muss hier keinen Beitrag zur Standfestigkeit leisten und lediglich die zur Schalldämmung notwendige Masse beitragen. Das plattenartige Füllungsmaterial kann Gipsplatten, Steinplatten, Holzplatten oder Verbundplatten und auch ein Türelement umfassen.

Die Eck-Ständer weisen vorzugsweise ein- oder mehrteilige Hohlprofile auf, wodurch deren Gewicht verringert ist und der Innenraum der Hohlprofile gleichzeitig zur Aufnahme von funktionalen Elementen wie elektrische Stromversorgung, Signalleitungen, Beleuchtung und/oder eine Belüftung für den ansonsten hermetisch abgeschlossenen Innenraum der Schallschutzkabine dienen kann. Dadurch ist es auch nicht nötig, die Umschließung der Schallschutzkabine an anderen Stellen, beispielsweise an den Füllungen zu durchbrechen, was die Schalldämmung beeinträchtigen würde. Die funktionalen Elemente können "steckerfertig" vorkonfiguriert und in den Eck-Ständern eingebaut für den Zusammenbau der Rahmenstruktur bereitgestellt werden.

In einer besonders bevorzugten Ausgestaltung ist im Inneren der Hohlprofile eines Eck-Ständers, vorzugsweise aber von zwei diametral gegenüberliegenden Eck-Ständern, jeweils ein Lüftungsgebläse angeordnet und die Hohlprofile definieren gleichzeitig einen Luft-Strömungskanal, der jeweils zur Innenseite der Rahmenstruktur und zur Außenseite der Rahmenstruktur offene Belüftungsöffnungen aufweist. Dadurch wird in jedem dieser Eck-Ständer eine eigenständige Funktionseinheit für die Belüftung der Schallschutzkabine geschaffen, die autark ohne weitere Elemente des Rahmens arbeiten und auch von nicht-fachkundigem Personal eingebaut werden kann. Werden bei zwei solchen Funktionseinheiten die Gebläse in entgegengesetzter Strömungsrichtung betrieben, kann ein definierter Belüftungsstrom mit hohem Durchsatz erreicht werden.

Bei der erfindungsgemäßen Rahmenstruktur sind die Profilsegmente des Deckenrahmens im Querschnitt so geformt, dass sie eine nach unten offene Wanne zumindest in den Bereichen zwischen den Eck-Ständern und optionalen weiteren Ständern bilden. Diese Wanne ist so ausgestaltet und angeordnet, dass das plattenartige Füllungsmaterial für Außenwände der Schallschutzkabine von der Innenseite der Rahmenstruktur her in diese eingesetzt werden kann. Das Einsetzen von Innen ermöglicht den Aufbau des Rahmens und damit der Schallschutzkabine auch an Stellen, beispielsweise Raumnischen oder -ecken, die nicht von außen zugänglich sind. Das plattenartige Füllungsmaterial hat für den Einbau vorzugsweise eine Höhenabmessung, die im Wesentlichen dem Abstand zwischen dem Boden- und dem Deckenrahmen entspricht. Nach dem Einsetzen in die Wanne in leicht geneigter Schrägstellung wird das Material durch die beidseitigen Flansche der Wanne gegen ein Kippen nach Außen und Innen gesichert. Dadurch ist der Aufbau selbst für eine einzelne Person möglich.

Erfindungsgemäß erstreckt sich die durch die Profilsegmente des Deckenrahmens gebildete und nach unten offene Wanne auch in den Bereich der Eck-Ständer und der optionalen weiteren Ständer und die Wanne ist dabei so gestaltet, dass sie auf die oberen Endabschnitte der Eck-Ständer und der optionalen weiteren Ständer aufsetzbar ist und die Endabschnitte im aufgesetzten Zustand umgreift und die Ständer gegen ein Kippen nach Außen und Innen auch noch ohne eine feste Verbindung mit dem Deckenrahmen sichert. Auch dieses strukturelle Merkmal erleichtert den Aufbau des Rahmens durch eine einzelne Person, weil nicht mehrere Ständer gleichzeitig gehalten werden müssen, während der Deckenrahmen bzw. dessen Segmente mit den Ständern verbunden werden.

Erfindungsgemäß sind die Profilsegmente des Deckenrahmens im Querschnitt so geformt, dass sie eine an der Innenseite der Rahmenstruktur liegende und nach unten geschlossene Wanne zumindest in den Bereichen zwischen den Eck-Ständern und optionalen weiteren Ständern bilden. Diese Wanne ist so geformt und angeordnet, dass Versorgungsleitungen wie Stromleitungen eingelegt werden können.

Diese beiden Wannen können durch separate Elemente an den Profilsegmenten des Deckenrahmens oder integral in Form eines einteiligen integralen Profils gebildet sein. Im zweiten Fall hätte das integrale Profil grob angenähert die Form eines liegenden "S".

Die an der Innenseite der Rahmenstruktur liegende und nach unten geschlossene Wanne besitzt einen zur Oberseite vorstehenden Flansch, der einen Bereich der Wanne abdeckt und eine Auflagefläche für auf der Oberseite des Flansches aufzulegendes plattenartiges Füllungsmaterial für die Decke der Schallschutzkabine definiert. Diese Auflagefläche ist vorzugsweise gegenüber einer Oberseite der Profilsegmente des Deckenrahmens etwa um die Dicke der durch das plattenartige Füllungsmaterial zu bildenden Deckenfüllung nach unten zurückgesetzt. Bei dieser Ausgestaltung erfüllt der Deckenrahmen bzw. dessen Profilsegmente mehrere Funktionen gleichzeitig: Aufnahme des Füllungsmaterials in der Wanne an der Außenseite, Aufnahme von Versorgungsleitungen an der Innenseite, und Halterung der Deckenfüllung. Durch den Versatz der Auflagefläche des Flansches nach unten bzw. innen ist es möglich, die plattenförmigen Deckenfüllungen auf die Oberseite der Rahmenstruktur aufzulegen und in die Position zu schieben, in der sie von selbst in die zurückgesetzten Aufnahmebereiche hineinfallen. Damit ist ein Einbau der Schallschutzkabine selbst an einer Stelle im Raum möglich, die nur wenig Platz zwischen Oberkante des Rahmens und einer Raumdecke lässt. Gleichzeitig wird durch den Versatz der Auflagefläche des Flansches nach dem Einlegen der Füllungen eine bündige Außenfläche erreicht, ohne dass weitere Verkleidungsteile angebaut werden müssten, und die in die Wanne zuvor eingelegten Versorgungsleitungen sind abgedeckt, werden aber durch den Flansch geschützt und vor einer Beschädigung durch das Füllungsmaterial mit der hohen Masse geschützt.

Im Folgenden wird eine bevorzugte Ausgestaltung der erfindungsgemäßen Rahmenstruktur beispielhaft unter Bezugnahme auf die Zeichnung im Detail erläutert. Darin zeigen:
Fig. 1 eine perspektivische Ansicht der unter Anwendung der erfindungsgemäßen Rahmenstruktur hergestellten Schallschutzkabine,
Fig. 2 die erfindungsgemäßen Rahmenstruktur im zusammengebauten Zustand ohne Füllungsmaterial,
Fig. 3 die erfindungsgemäßen Rahmenstruktur von Fig. 2 in einer auseinandergezogenen Darstellung,
Fig. 4 einen mehrteiligen Eck-Ständer der Rahmenstruktur in auseinandergezogener Darstellung, und
Fig. 5 einen oberen Eckbereich der Rahmenstruktur in auseinandergezogener Darstellung zur Erläuterung der Profilsegmente des Deckenrahmens.

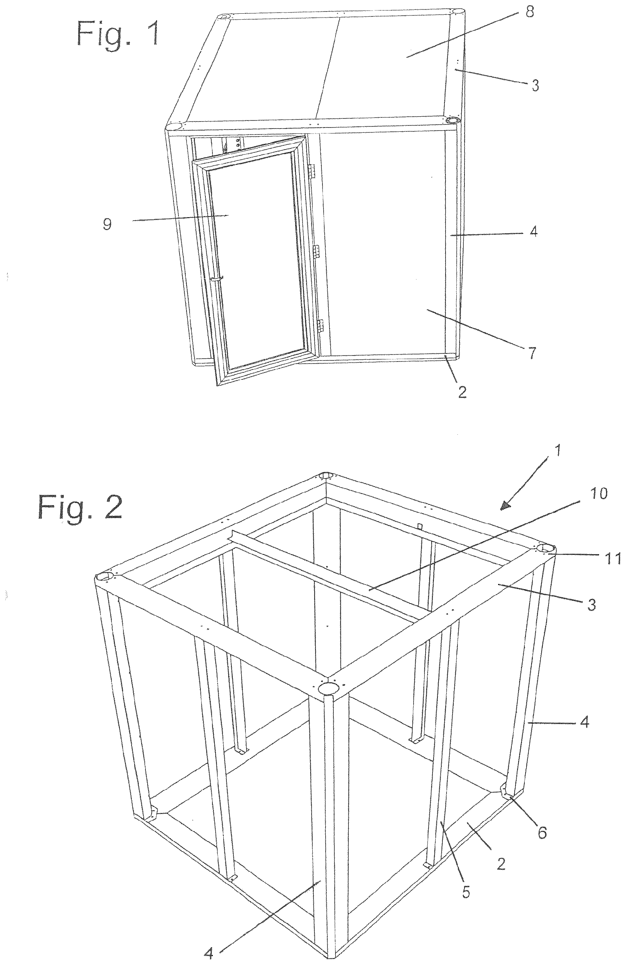

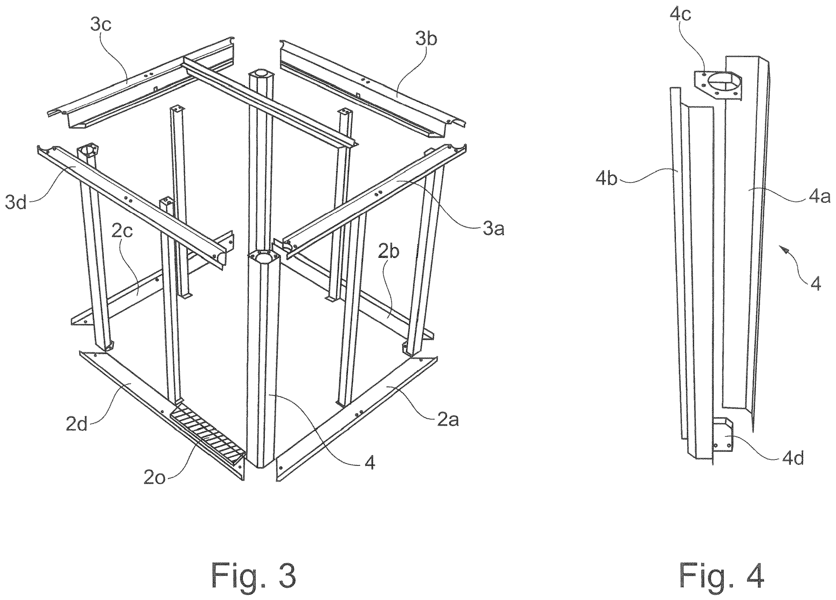

Die in den Figuren gezeigte Rahmenstruktur 1 zum Aufbau einer Schallschutzkabine besitzt einen horizontalen Bodenrahmen 2 und einen horizontalen Deckenrahmen 3, die jeweils aus mehreren und innerhalb des jeweiligen Rahmens vorzugsweise identischen Profilsegmenten 2a-d;3a-d zusammengesetzt sind. Der Bodenrahmen 2 und der Deckenrahmen 3 sind durch vertikale Eck-Ständer 4 lösbar miteinander verbunden, so dass eine selbsttragende Struktur gebildet wird (siehe Fig. 2). Die Profilsegmente 2a-d;3a-d des Bodenrahmens 2 und des Deckenrahmens 3 können jeweils miteinander über lösbare Verbindungen wie Schrauben direkt aneinander oder über Verbindungsplatten verbunden sein. Wie aus Fig. 2 und 3 hervorgeht, sind die Profilsegmente 2a-d des Bodenrahmens 2 an den Ecken 6 stumpf aneinandergesetzt und jeweils mit unteren Flanschen 4d der Eck-Ständer 4 verschraubt und dadurch miteinander verbunden. Eine gleichartige Verbindung kann auch an dem Stoß der Profilsegmente 3a-d des Deckenrahmens 3 mit oberen Flanschen 4c der Eck-Ständer 4 erfolgen, so dass bereits durch die 8 Verbindungen an den Ecken eine selbsttragende Rahmenstruktur gebildet ist. Optional können in der Mitte der jeweiligen Flächen oder an weitern Stellen, sofern für die Unterteilung oder Festigkeit erforderlich, weitere Ständer 5 zwischen den Boden- und den Deckenrahmen eingebaut werden.

In die so gebildete Rahmenstruktur kann dann plattenartiges Füllungsmaterial 7,8,9 zum Ausfüllen der Öffnungen bzw. Zwischenräume zwischen den Profilsegmenten 2a-d;3a-d und Ständern 4,5 zum Umschließen der Schallschutzkabine eingesetzt werden. Die fertige Schallschutzkabine ist in Fig. 1 gezeigt.

Die Eck-Ständer 4 und ggf. auch die Zwischen-Ständer 5 weisen ein Hohlprofil auf, das aus einem oder mehreren Teilen aufgebaut sein kann. Die Fig. 4 zeigt ein solches mehrteiliges Hohlprofil, das aus Winkelteilen 4a und 4b zusammengesetzt ist, die zusammen den inneren Hohlraum definieren. An den axialen Enden sind die bereits erwähnten Befestigungsflansche 4c und 4d vorgesehen und verschließen den inneren Hohlraum teilweise. Der innere Hohlraum des Hohlprofils kann funktionale Elemente wie elektrische Stromversorgung, Signalleitungen, Beleuchtung und/oder eine Belüftung aufnehmen, die in den Figuren nicht gezeigt sind. So kann ein Lüftungsgebläse in den inneren Hohlraum, beispielsweise am oberen Ende eingebaut werden und die Luft über eine Öffnung im oberen Flansch 4c ansaugen oder ausstoßen (je nach Betriebsrichtung). Weitere Belüftungsöffnungen (zum Ansaugen oder Ausstoßen der Luft) können entlang den Seitenwänden des Ständers vorgesehen werden, so dass insgesamt ein Luft-Strömungskanal im Inneren eines solchen Hohlprofils definiert ist, der einen Luftstrom von der Außenseite der Schallschutzkabine in das Innere oder umgekehrt allein durch den jeweiligen Eck-Ständer ermöglicht. Bei mehreren solchen im Inneren mit Luft-Strömungskanal versehenen Eck-Ständern ist entweder nur einer mit Gebläse ausgestattet und ein anderer lediglich ein passiver Kanal oder jeder Eck-Ständer, vorzugsweise von zweien, die einander diametral gegenüberliegen, weist ein Gebläse auf, und die Gebläse sind in entgegengesetzter Förderrichtung betreibbar. Dadurch wird auch bei geringer Förderleistung des jeweiligen Gebläses, was den Geräuschpegel senkt, insgesamt ein hoher Luftdurchsatz durch die Kabine erreicht.

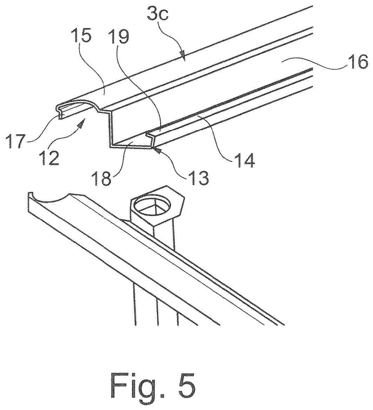

Während die Profilsegmente 2a-d des Bodenrahmens relativ einfache, nur an der Außenkante nach oben abgewinkelte Profile sein können, die das plattenartige Füllungsmaterial nach unten und zur Außenseite abstützen, sind die Profilsegmente 3a-d des Deckenrahmens 3 im Querschnitt komplizierter aufgebaut. Aus der Fig. 5, die einen oberen Eckbereich der Rahmenstruktur vergrößert zeigt, ist erkennbar, dass die Profilsegmente 3a-d so geformt sind, dass sie eine nach unten offene, im Querschnitt etwa umgekehrt U-förmige Wanne 12 bilden, die von einem vertikalen Außensteg 17, eine vorzugsweise horizontale oder leicht gekrümmte Oberseite 15 und einen vertikalen Mittelsteg 16 begrenzt wird. In diese Wanne 12 kann das plattenartige Füllungsmaterial 7, das die Außenwände der Schallschutzkabine bilden wird, von der Innenseite der Rahmenstruktur 1 her eingesetzt werden. Die Weite der Wanne 12 ist daher mindestens, vorzugsweise genauso groß wie die Dicke der angestrebten Wandfüllung.

Die Wanne 12 ist zumindest in den Bereichen zwischen den Eck-Ständern 4 und, sofern vorhanden, weiteren ZwischenStändern 5 ausgebildet, weil nur dort das Füllungsmaterial eingesetzt wird. Vorzugsweise erstreckt sich die Wanne 12 aber über die gesamte Länge der jeweiligen Profilsegmente und erfindungsgemäß erstreckt sie sich auch in den Bereich der Eck-Ständer 4 und über die Zwischen-Ständer 5, so dass die Wanne 12 auf die oberen Endabschnitte der Eck- und Zwischen-Ständer 4,5 (ggf. einschließlich der oberen Flansche 4c) aufsetzbar ist und die Endabschnitte im aufgesetzten Zustand umgreift. Dadurch können die Ständer, obwohl sie ggf. zu diesem Zeitpunkt nur an den unteren Enden mit dem Bodenrahmen 2 verbunden sind, formschlüssig zumindest provisorisch gegen ein Kippen nach Außen und Innen gesichert werden, bis eine feste Verbindung über Schrauben oder andere lösbare Verbindungsmittel hergestellt ist.

Die Profilsegmente 3a-d des Deckenrahmens 3 sind im Querschnitt ferner so geformt, dass sie auch einen im eingebauten Zustand an der Innenseite der Rahmenstruktur 1 liegende und nach unten geschlossene Wanne 13, ebenfalls zumindest in den Bereichen zwischen den Ständern 4,5 bilden. In diese weitere Wanne 13, die im Querschnitt etwa liegend L-förmig oder ebenfalls U-förmig sein kann, können Versorgungsleitungen wie Stromleitungen eingelegt werden. Die Strom- und Signalleitungen können beispielsweise die Zu- und Verbindungsleitungen zu den Funktionseinheiten in den Eck-Ständern sein. Diese Wanne 13 wird an der Innenseite durch einen zur Oberseite vorstehenden Flansch 14 begrenzt, der in einem vertikalen Abstand von einer Bodenfläche 18 nach außen umgebogen ist und so einen Bereich der Wanne 13 abdeckt. Dieser nach außen abgebogene Abschnitt 19 definiert eine Auflagefläche für plattenartiges Füllungsmaterial 8, das die Decke der Schallschutzkabine bilden soll. Die Festigkeit bzw. Tragfähigkeit dieses Flansches 14 kann, sofern erforderlich, dadurch erhöht werden, dass der nach außen abgebogene Abschnitt 19 wieder nach unten abgebogen wird und sich an der Bodenfläche der Wanne 13 abstützt (nicht gezeigt).

Die Auflagefläche des Flansches 14 ist in Fig. 5 ebenfalls erkennbar gegenüber einer Oberseite 15 des Profilsegments des Deckenrahmens 3 etwa um die Dicke der durch das plattenartige Füllungsmaterial 8 zu bildenden Deckenfüllung nach unten zurückgesetzt, so dass ein Aufnahmeraum für das Plattenmaterial definiert ist, der durch den umlaufenden vertikalen Mittelsteg 16 aller Profilsegmente des Deckenrahmens 3 gebildet ist. In der dargestellten Ausführungsform sind sowohl die Wanne 12 als auch die innenliegende Wanne 13 integral in den Profilsegmenten 3a-d des Deckenrahmens 3 ausgebildet, die dadurch einen Querschnitt in der Form eines liegenden "S" haben. Die Wannen können aber auch durch separate Profile gebildet werden, die z.B. entlang des Mittelstegs oder an anderer Stelle miteinander lösbar über geeignete Verbindungsmittel oder durch verschweißen oder verkleben verbunden werden.

In Fig. 3 nur schematisch dargestellt können die Profilsegmente 2a-d des Bodenrahmens 2 jeweils mit einem Gleit- und Auflageelement 20 versehen sein, dessen Oberfläche über die Höhe von Verbindungsschrauben zur Verbindung zwischen den Profilsegmenten 2a-d und den Eck- oder ZwischenStändern 4,5 erhaben ist. Auf diese Gleit- und Auflageelemente 20 kann das schwere plattenartige Füllungsmaterial 7 für die Außenwände der Schallschutzkabine von einer Stellung, in der die Platten an der Oberseite in die nach unten offene Wanne 12 der Profilsegmente 3a-d des Deckenrahmens 3 eingesetzt sind, in eine vertikale Position geschoben werden und es wird dabei geführt und abgestützt und muss nicht über die im Bodenbereich evtl. vorhandenen Schrauben gehoben werden.

Bei der in den Figuren dargestellten Rahmenstruktur 1 sind sowohl der Bodenrahmen 2 als auch der Deckenrahmen 3 in der Draufsicht rechteckig, so dass die durch den Bodenrahmen 2, den Deckenrahmen 3 und die vertikalen Eck-Ständer 4, sowie ggf. optionale Zwischen-Ständer 5 gebildete selbsttragende Rahmenstruktur insgesamt quaderförmig ist. Davon abweichend kann die Rahmenstruktur und die fertige Schallschutzkabine aber auch im Grundriss eine polygonale Struktur aufweisen. Hierzu müssen nur die einzelnen Profilsegmente, die den Boden- und den Deckenrahmen bilden, sowie die Verbindungsflansche der Ständer entsprechend den Verbindungswinkeln gestaltet werden. Diese Gestaltung kann auch unter akustischen Gesichtspunkten vorteilhaft sein, wenn rechte Winkel zwischen den einzelnen Flächenfüllungen der Schallschutzkabine vermieden werden sollen.

## Patentansprüche

1. Rahmenstruktur (1) zum Aufbau einer Schallschutzkabine, mit
einem horizontalen Bodenrahmen (2), und
einem horizontalen Deckenrahmen (3),
wobei der Bodenrahmen (2) und der Deckenrahmen (3) jeweils aus Profilsegmenten (2a-d;3a-d) zusammengesetzt sind, und
wobei der Bodenrahmen (2) und der Deckenrahmen (3) mindestens durch vertikale Eck-Ständer (4) lösbar miteinander verbunden sind und so eine selbsttragende Struktur bilden, in die plattenartiges Füllungsmaterial (7,8,9) zum Ausfüllen von Strukturöffnungen zwischen den Profilsegmenten (2a-d;3a-d) und Ständern (4,5) zum Umschließen der Schallschutzkabine eingesetzt werden kann,
wobei die Profilsegmente (3a-d) des Deckenrahmens (3) im Querschnitt so geformt sind, dass sie eine nach unten offene Wanne (12) in dem Bereich zwischen den Eck-Ständern (4) bilden und in die Wanne (12) von der Innenseite der Rahmenstruktur (1) her das plattenartige Füllungsmaterial (7) für Außenwände der Schallschutzkabine eingesetzt werden kann, und
wobei sich die durch die Profilsegmente (3a-d) des Deckenrahmens (3) gebildete und nach unten offene Wanne (12) auch in den Bereich der Eck-Ständer (4) erstreckt, derart, dass die Wanne (12) auf die oberen Endabschnitte der Eck-Ständer (4) aufsetzbar ist und die Endabschnitte im aufgesetzten Zustand umgreift und dadurch gegen ein Kippen nach Außen und Innen sichert,
**dadurch gekennzeichnet, dass**
die Profilsegmente (3a-d) des Deckenrahmens (3) im Querschnitt so geformt sind, dass sie eine an der Innenseite der Rahmenstruktur (1) liegende und nach unten geschlossene Wanne (13) zumindest in den Bereichen zwischen den Eck-Ständern (4) und optionalen weiteren Ständern (5) bilden, in die Versorgungsleitungen wie Stromleitungen eingelegt werden können.

2. Rahmenstruktur (1) gemäß Anspruch 1, wobei die Eck-Ständer (4) die Profilsegmente (2a-d) des Bodenrahmens (2) jeweils an den Ecken (6) miteinander verbinden.

3. Rahmenstruktur (1) gemäß Anspruch 1 oder 2, wobei die Eck-Ständer (4) ein- oder mehrteilige Hohlprofile aufweisen.

4. Rahmenstruktur (1) gemäß Anspruch 3, wobei mindestens einer, vorzugsweise zwei der Eck-Ständer (4) ein Lüftungsgebläse im Inneren des jeweiligen Hohlprofils aufnimmt bzw. aufnehmen und darin auch ein Luft-Strömungskanal definiert ist, der jeweils zur Innenseite der Rahmenstruktur (1) und zur Außenseite der Rahmenstruktur (1) offene Belüftungsöffnungen aufweist.

5. Rahmenstruktur (1) gemäß Anspruch 4, wobei die Lüftungsgebläse an zwei Eck-Ständern (4), vorzugsweise an diametral gegenüberliegenden Ecken der Rahmenstruktur (1), vorgesehen und in entgegengesetzter Strömungsrichtung betreibbar sind.

6. Rahmenstruktur (1) gemäß einem der Ansprüche 1 bis 5, wobei die Profilsegmente (3a-d) die nach unten offene Wanne (12) in den Bereichen zwischen den Eck-Ständern (4) und weiteren Ständern (5) gebildet ist.

7. Rahmenstruktur (1) gemäß Anspruch 6, wobei sich die durch die Profilsegmente (3a-d) des Deckenrahmens (3) gebildete und nach unten offene Wanne (12) auch in den Bereich der weiteren Ständer (5) erstreckt, derart, dass die Wanne (12) auf die oberen Endabschnitte der weiteren Ständer (5) aufsetzbar ist und die Endabschnitte im aufgesetzten Zustand umgreift und dadurch gegen ein Kippen nach Außen und Innen sichert.

8. Rahmenstruktur (1) gemäß einem der Ansprüche 1 bis 7, wobei die an der Innenseite der Rahmenstruktur (1) liegende und nach unten geschlossene Wanne (13) einen zur Oberseite vorstehenden Flansch (14) aufweist, der einen Bereich der Wanne (13) abdeckt und eine Auflagefläche für auf der Oberseite des Flansches (14) aufzulegendes plattenartiges Füllungsmaterial (8) für die Decke der Schallschutzkabine definiert.

9. Rahmenstruktur (1) gemäß Anspruch 8, wobei die Auflagefläche des Flansches (14) gegenüber einer Oberseite (15) der Profilsegmente (3a-d) des Deckenrahmens (3) etwa um die Dicke der durch das plattenartige Füllungsmaterial (8) zu bildenden Deckenfüllung nach unten zurückgesetzt ist.

10. Rahmenstruktur (1) gemäß einem der Ansprüche 1 bis 9, wobei die nach unten offene Wanne (12) und die an der Innenseite der Rahmenstruktur (1) liegende und nach unten geschlossene Wanne (13) integral in den Profilsegmenten (3a-d) des Deckenrahmens (3) ausgebildet sind.

11. Rahmenstruktur (1) gemäß einem der Ansprüche 1 bis 10, wobei die Profilsegmente (2a-d) des Bodenrahmens (2) jeweils mit einem Gleit- und Auflageelement versehen sind, dessen Oberfläche über die Höhe von Verbindungsschrauben zur Verbindung zwischen den Profilsegmenten (2a-d) und den Eck-Ständern (4) und optionalen weiteren Ständern (5) erhaben ist und auf dem das plattenartige Füllungsmaterial (7) für Außenwände der Schallschutzkabine von einer Stellung, in der das Füllungsmaterial (7) an der Oberseite in die nach unten offene Wanne (12) der Profilsegmente (3a-d) des Deckenrahmens (3) eingesetzt ist, in eine vertikale Position geschoben werden kann, während es auf dem Gleit- und Auflageelement gleitet.

12. Rahmenstruktur (1) gemäß einem der Ansprüche 1 bis 9, wobei sowohl der Bodenrahmen (2) als auch der Deckenrahmen (3) in der Draufsicht rechteckig sind, so dass die durch den Bodenrahmen (2), den Deckenrahmen (3) und die vertikalen Eck-Ständer (4) sowie optionale weitere Ständer (5) gebildete selbsttragende Struktur quaderförmig ist.

13. Rahmenstruktur (1) gemäß einem der Ansprüche 1 bis 12, wobei das plattenartige Füllungsmaterial zum Ausfüllen von Strukturöffnungen zwischen den Profilsegmenten (2a-d;3a-d) auch ein Türelement (9) umfassen kann.

## Claims

1. Frame structure (1) for the construction of a sound-insulating cabin, comprising
a horizontal floor frame (2), and
a horizontal ceiling frame (3),
wherein the floor frame (2) and the ceiling frame (3) are each composed of profile segments (2a-d;3a-d), and
wherein the floor frame (2) and the ceiling frame (3) are detachably connected to each other at least by vertical corner posts (4) and thus form a self-supporting structure into which panel-like filling material (7,8,9) can be inserted for filling structural openings between the profile segments (2a-d;3a-d) and posts (4,5) for enclosing the sound-insulating cabin,
wherein the profile segments (3a-d) of the ceiling frame (3) are shaped in cross-section such that they form a downwardly open trough (12) in the area between the corner posts (4) and into which trough (12), from the inside of the frame structure (1), the panel-like filling material (7) for outer walls of the sound-insulating cabin can be inserted, and
wherein the trough (12), which is formed by the profile segments (3a-d) of the ceiling frame (3) and is open at the bottom also extends into the region of the corner posts (4) in such a manner that the trough (12) can be placed on the upper end portions of the corner posts (4) and embraces the end portions in the placed-on state and thereby secures them against tilting outwards and inwards,
**characterised in that**
the profile segments (3a-d) of the ceiling frame (3) are shaped in cross-section in such a way that they form a trough (13) disposed on the inside of the frame structure (1) and closed at the bottom, at least in the regions between the corner posts (4) and optional further posts (5), into which supply lines such as power lines can be placed.

2. Frame structure (1) according to claim 1, wherein the corner posts (4) respectively connect the profile segments (2a-d) of the floor frame (2) to each other at the corners (6) .

3. Frame structure (1) according to claim 1 or 2, wherein the corner posts (4) comprise single-part or multi-part hollow profiles.

4. Frame structure (1) according to claim 3, wherein at least one, preferably two, of the corner posts (4) accomodates or accommodate a ventilation fan in the interior of the respective hollow profile and an air flow channel is also defined therein, which has ventilation openings respectively opening to the inside of the frame structure (1) and to the outside of the frame structure (1).

5. Frame structure (1) according to claim 4, wherein the ventilation fans are provided at two corner posts (4), preferably on diametrically opposite corners of the frame structure (1), and are operable in opposite flow directions.

6. Frame structure (1) according to one of the claims 1 to 5, wherein the profile segments (3a-d) form the downwardly open trough (12) in the regions between the corner posts (4) and further posts (5).

7. Frame structure (1) according to claim 6, wherein the downwardly open trough (12) formed by the profile segments (3a-d) of the ceiling frame (3) also extends into the region of the further posts (5) in such a way that the trough (12) can be placed on the upper end portions of the further posts (5) and embraces the end portions in the placed-on state and thereby secures them against tilting outwards and inwards.

8. Frame structure (1) according to one of claims 1 to 7, wherein the trough (13) lying on the inside of the frame structure (1) and closed at the bottom has a flange (14) projecting towards the upper side, which flange covers an area of the trough (13) and defines a support surface for panel-like filling material (8) to be placed on the upper side of the flange (14) for the ceiling of the sound-insulating cabin n.

9. Frame structure (1) according to claim 8, wherein the support surface of the flange (14) is recessed downwards relative to an upper side (15) of the profile segments (3a-d) of the ceiling frame (3) approximately by the thickness of the ceiling filling to be formed by the panel-like filling material (8).

10. Frame structure (1) according to any one of claims 1 to 9, wherein the downwardly open trough (12) and the downwardly closed trough (13) lying on the inside of the frame structure (1) are integrally formed in the profile segments (3a-d) of the ceiling frame (3).

11. Frame structure (1) according to any one of claims 1 to 10, wherein the profile segments (2a-d) of the floor frame (2) are each provided with a sliding and supporting element, the surface of which is raised above the height of connecting screws for connection between the profile segments (2a-d) and the corner posts (4) and optional further posts (5) and on which the panel-like filling material (7) for outer walls of the sound-insulating cabin is can be pushed from a position, in which the filling material (7) is inserted at the top into the downwardly open trough (12) of the profile segments (3a-d) of the ceiling frame (3), into a vertical position while sliding on the sliding and supporting element.

12. Frame structure (1) according to any one of claims 1 to 9, wherein both the floor frame (2) and the ceiling frame (3) are rectangular in plan view, so that the self-supporting structure formed by the floor frame (2), the ceiling frame (3) and the vertical corner posts (4) and optional further posts (5) is cuboidal.

13. Frame structure (1) according to any of claims 1 to 12, wherein the panel-like filling material for filling structural openings between the profile segments (2a-d;3a-d) may also comprise a door element (9).

## Revendications

1. Structure de cadre (1) pour la construction d'une cabine d'isolation acoustique, comprenant
un cadre de plancher horizontal (2), et
un cadre de plafond horizontal (3),
le cadre de plancher (2) et le cadre de plafond (3) étant chacun composés de segments profilés (2a-d ; 3a-d), et
le cadre de plancher (2) et le cadre de plafond (3) étant reliés l'un à l'autre de manière détachable au moins par des montants de coin verticaux (4) et formant ainsi une structure autoportante, dans laquelle peut être inséré un matériau de remplissage en forme de plaque (7, 8, 9) pour remplir des ouvertures structurelles entre les segments profilés (2a-d ; 3a-d) et des montants (4, 5) pour entourer la cabine d'isolation acoustique,
les segments profilés (3a-d) du cadre de plafond (3) étant formés en section transversale de telle sorte qu'ils forment un bac (12) ouvert vers le bas dans la zone entre les montants de coin (4), et le matériau de remplissage en forme de plaque (7) pour les parois extérieures de la cabine d'isolation acoustique peut être inséré dans le bac (12) à partir du côté intérieur de la structure de cadre (1), et
le bac (12) formé par les segments profilés (3a-d) du cadre de plafond (3) et ouvert vers le bas s'étendant également dans la zone des montants de coin (4), de telle sorte que le bac (12) peut être posé sur les sections d'extrémité supérieures des montants de coin (4) et vient en prise autour des sections d'extrémité à l'état posé et les empêche ainsi de basculer vers l'extérieur et l'intérieur,
**caractérisée en ce que**
les segments profilés (3a-d) du cadre de plafond (3) sont formés en section transversale de telle sorte qu'ils forment un bac (13) situé sur le côté intérieur de la structure de cadre (1) et fermé vers le bas, au moins dans les zones entre les montants de coin (4) et d'autres montants optionnels (5), dans lequel des lignes d'alimentation telles que des lignes électriques peuvent être installées.

2. Structure de cadre (1) selon la revendication 1, dans laquelle les montants de coin (4) relient les segments profilés (2a-d) du cadre de plancher (2) respectivement aux coins (6) les uns avec les autres.

3. Structure de cadre (1) selon la revendication 1 ou 2, dans laquelle les montants de coin (4) présentent des profilés creux en une ou plusieurs parties.

4. Structure de cadre (1) selon la revendication 3, dans laquelle au moins un, de préférence deux, des montants de coin (4) reçoit ou reçoivent un ventilateur d'aération à l'intérieur du profilé creux respectif et un canal d'écoulement d'air y est également défini, qui présente des ouvertures de ventilation ouvertes respectivement vers le côté intérieur de la structure de cadre (1) et vers le côté extérieur de la structure de cadre (1).

5. Structure de cadre (1) selon la revendication 4, dans laquelle les ventilateurs d'aération sont prévus sur deux montants de coin (4), de préférence sur des coins diamétralement opposés de la structure de cadre (1), et peuvent être actionnés dans des directions d'écoulement opposées.

6. Structure de cadre (1) selon l'une quelconque des revendications 1 à 5, dans laquelle les segments profilés (3a-d) forment le bac (12) ouvert vers le bas dans les zones entre les montants de coin (4) et d'autres montants (5).

7. Structure de cadre (1) selon la revendication 6, dans laquelle le bac (12) formé par les segments profilés (3a-d) du cadre de plafond (3) et ouvert vers le bas s'étend également dans la zone des autres montants (5), de telle sorte que le bac (12) peut être posé sur les sections d'extrémité supérieures des autres montants (5) et vient en prise autour des sections d'extrémité à l'état posé et les empêche ainsi de basculer vers l'extérieur et l'intérieur.

8. Structure de cadre (1) selon l'une quelconque des revendications 1 à 7, dans laquelle le bac (13) situé sur le côté intérieur de la structure de cadre (1) et fermé vers le bas présente une bride (14) faisant saillie vers le côté supérieur, qui recouvre une zone du bac (13) et définit une surface d'appui pour un matériau de remplissage en forme de plaque (8) à appliquer sur le côté supérieur de la bride (14) pour le plafond de la cabine d'isolation acoustique.

9. Structure de cadre (1) selon la revendication 8, dans laquelle la surface d'appui de la bride (14) est en retrait vers le bas par rapport à un côté supérieur (15) des segments profilés (3a-d) du cadre de plafond (3) d'environ l'épaisseur du remplissage de plafond à former par le matériau de remplissage en forme de plaque (8).

10. Structure de cadre (1) selon l'une quelconque des revendications 1 à 9, dans laquelle le bac (12) ouvert vers le bas et le bac (13) situé sur le côté intérieur de la structure de cadre (1) et fermé vers le bas sont formés d'un seul tenant dans les segments profilés (3ad) du cadre de plafond (3).

11. Structure de cadre (1) selon l'une quelconque des revendications 1 à 10, dans laquelle les segments profilés (2a-d) du cadre de plancher (2) sont chacun munis d'un élément de glissement et d'appui, dont la surface est surélevée par rapport à la hauteur de vis de liaison pour la liaison entre les segments profilés (2a-d) et les montants de coin (4) et d'autres montants optionnels (5), et sur lequel le matériau de remplissage en forme de plaque (7) pour les parois extérieures de la cabine d'isolation acoustique peut être coulissé depuis une position, dans laquelle le matériau de remplissage (7) est inséré sur le côté supérieur dans le bac (12) ouvert vers le bas des segments profilés (3a-d) du cadre de plafond (3), dans une position verticale, tout en glissant sur l'élément de glissement et d'appui.

12. Structure de cadre (1) selon l'une quelconque des revendications 1 à 9, dans laquelle le cadre de plancher (2) et le cadre de plafond (3) sont tous deux rectangulaires en vue de dessus, de telle sorte que la structure autoportante formée par le cadre de plancher (2), le cadre de plafond (3) et les montants de coin verticaux (4) ainsi que d'autres montants optionnels (5) est de forme parallélépipédique.

13. Structure de cadre (1) selon l'une quelconque des revendications 1 à 12, dans laquelle le matériau de remplissage en forme de plaque pour remplir des ouvertures structurelles entre les segments profilés (2a-d ; 3a-d) peut également comprendre un élément de porte (9).
